# EUROPÄISCHE PATENTSCHRIFT

(11) **EP 3 432 104 B1**
(45) Veröffentlichungstag und Bekanntmachung des Hinweises auf die Patenterteilung: **11.05.2022**
(21) Anmeldenummer: 18183363.3
(22) Anmeldetag: 13.07.2018
(51) Int. Cl.: G05B 23/02, G05B 19/418

(54) **BEARBEITUNGSVORRICHTUNG ZUR DURCHFÜHRUNG EINER BEARBEITUNG VON WERKSTÜCKEN, BEARBEITUNGSPARAMETEROPTIMIERUNGSVORRICHTUNG, SYSTEM UND VERFAHREN ZUR ANALYSE UND/ODER OPITIMIERUNG VON PARAMETERN**
MEANS FOR ENABLING THE PROCESSING OF A WORKPIECE, MEANS FOR OPTIMIZING WORKING PARAMETERS, SYSTEM AND METHOD FOR ANALYSING AND/OR OPTIMISING OF PARAMETERS
MOYEN POUR PERMETTRE L'ELABORATION D'UNE PIECE À USINER, MOYEN POUR OPTIMISER LES PARAMÈTRES D'USINAGE, SYSTÈME ET MÉTHODE POUR ANALYSER ET/OU OPTIMISER DES PARAMÈTRES

(30) Priorität: 19.07.2017 DE 102017116259
(43) Veröffentlichungstag der Anmeldung: 23.01.2019
(73) Patentinhaber: HOMAG GmbH, 72296 Schopfloch (DE)
(72) Erfinder: Hellmann, Torben, 33719 Bielefeld (DE)
(74) Vertreter: Hoffmann Eitle

(56) Entgegenhaltungen:
- WO-A1-2013/046231
- WO-A1-2016/128019
- GB-A- 2 283 835
- US-A- 4 329 933
- US-A1- 2016 140 429
- US-B1- 6 618 640

## Beschreibung

### Technisches Gebiet

Die vorliegende Erfindung betrifft ein System und Verfahren zur Analyse und/oder Optimierung von Maschinen- und Bearbeitungsparameter einer Bearbeitungsvorrichtung.

### Stand der Technik

Bisher sind Bearbeitungsvorrichtungen, Systeme und Verfahren bekannt, bei denen jegliche Bearbeitungsvorrichtungen zur Bearbeitung von Werkstücken in Systemen direkt mit dem Netzwerk (Intra- oder Internet) verbunden sind. Damit eine solche Übertragung von Daten möglich ist, muss jede Bearbeitungsvorrichtung mit einer Datenübertragungsvorrichtung oder einem Datenkabel versehen sein. Ferner ist es dadurch bisher möglich, die Bearbeitungsparameter der Maschinen oder die Maschinen selbst mittels einer Übertragung der Rohdaten zu überwachen. In alternativen Ausgestaltungen ist eine zentrale Steuerung der Bearbeitungsparameter ebenfalls bereits möglich.

In bisherigen Bearbeitungsvorrichtungen, Systemen und Verfahren ist es somit notwendig, jede Bearbeitungsvorrichtung mit einem Netzwerk zu verbinden. Ein großer Nachteil hierbei ist, dass besonders bei der üblichen Verwendung von mehreren Bearbeitungsvorrichtungen in einer Fabrikhalle Kabel zu jeder Vorrichtung gelegt werden müssen, um eine Steuerung zu ermöglichen. Insbesondere im Holz- und Kunststoffbearbeitungsbereich ist dies problematisch, da durch Staub und Späne ein Risiko der fehlerhaften Datenübertragung erzeugt werden kann. Ferner ist die Verlegung von Kabeln stets mit einem Kostenaufwand verbunden. Sollte dies durch eine kabellose Übertragungstechnologie gelöst werden, ist auch hier ein Mehraufwand durch die Verwendung verschiedener Router, Modems, etc. notwendig. Außerdem birgt dies neben einem erhöhten Kostenaufwand den Nachteil einer unsicheren Datenübertragung und ebenfalls leichten Störanfälligkeit der Datenübertragung. Besonders im Bereich der Bearbeitungsmaschinen mit bidirektionalen Schnittstellen zum Internet zeigt sich eine erhöhte Anfälligkeit für Hackerangriffe, da hier eine Absicherung durch Firewalls, o.ä. notwendig ist.

Eine weitere bisherige Möglichkeit, Daten von nicht mit einem Datennetzwerk verbundenen Bearbeitungsvorrichtungen zu übertragen ist das Abfotografieren der Rohdaten (der Parameter) direkt an der Vorrichtung oder an der dezentralen Steuerung. Dies ist nachteilig, da durch das bisherige Abfotografieren von Rohdaten der Bearbeitung und/oder der Maschine und dem händischen Eingeben beim Maschinenhersteller Fehler entstehen können. Ferner ist das Auftreten von Fehlern bei der Rückeinspeisung von optimierten Parametern möglich und es kann daher zu Zwischenfällen oder zu Zerstörung an der Maschine kommen.

Weiter nachteilig für ein bisheriges System ist, dass die Rohdaten in einer großen Datenmenge übertragen werden müssen. Somit ist das Auslesen der Daten stets komplex und langsam. Dies birgt ferner den Nachteil, dass eine hohe Übertragungsgeschwindigkeit notwendig ist. Somit ist es meist von Nöten, dass Servicemitarbeiter des Bearbeitungsvorrichtungsherstellers direkt vor Ort in der Fertigungshalle, in der die Bearbeitungsvorrichtungen positioniert sind, tätig sein müssen.

Somit ist ein solches System komplex, unsicher gegenüber Hackerangriffen, fehleranfällig und teuer, sowohl in der Anschaffung und der Inbetriebnahme, als auch bei der Verwendung.

Beispielhaft sei dabei auf die US 2016/140429 A1, die WO 2016/128019 A2, die WO 2013/046231 A1 und die GB 2283835A verwiesen, welche die Möglichkeit einer Darstellung der aktuellen Betriebsparameter einer Vorrichtung als ablesbares, graphisches Erkennungsmuster offenbaren.

### Darstellung der Erfindung

Es ist Aufgabe der vorliegenden Erfindung System zur Analyse und/oder Optimierung der Bearbeitung von Werkstücken bereitzustellen, mit der die zuvor genannten Probleme zumindest teilweise behoben werden können.

Ferner ist es ein Ziel der Erfindung, eine schnelle, einfache und mit einem kleinen Datenpaket übertragbare Analyse und Optimierung von Bearbeitungsparametern einer Bearbeitungsvorrichtung bereitzustellen. Eine weitere Aufgabe liegt darin, den Support für die Bearbeitungsvorrichtung mobil zu ermöglichen, während die Bearbeitungsvorrichtung selbst offline bleiben kann.

Diese Aufgabe wird erfindungsgemäß durch ein System gemäß Anspruch 1, sowie den entsprechenden Verfahren gelöst. Bevorzugte Ausgestaltungen ergeben sich aus den Unteransprüchen.

### Kurze Beschreibung der Zeichnungen

Nachfolgend werden anhand der beigefügten Figuren beispielhafte Ausführungsformen der Erfindung näher erläutert.
Fig. 1 zeigt einen schematischen Aufbau einer Bearbeitungsvorrichtung.
Fig. 2 zeigt einen Ablauf einer Optimierung der Parameter einer Bearbeitungsvorrichtung.

### Beschreibung der Ausführungsformen

In den Figuren werden gleiche Elemente durchgehend mit gleichen Bezugszeichen versehen. Es wird darauf verzichtet, diese Elemente für jede Figur neu zu bezeichnen und stattdessen auf die Figurenbeschreibung der jeweils vor- oder nachgeordneten Figur verwiesen.

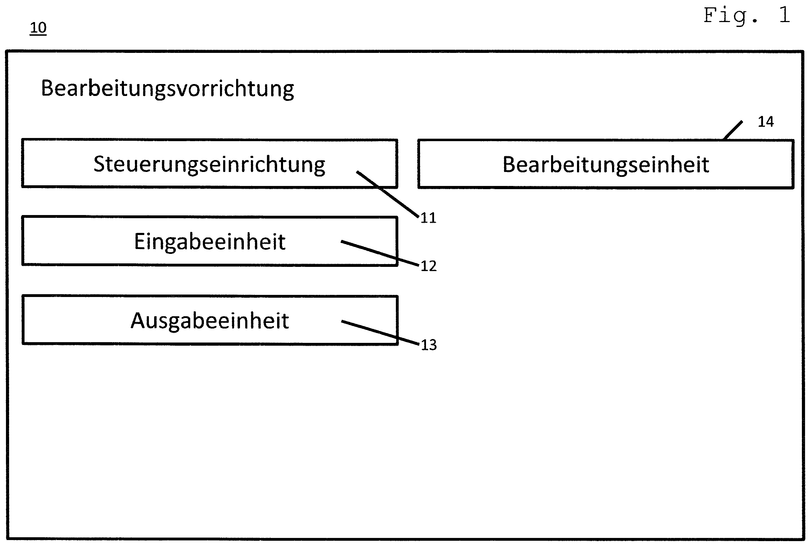

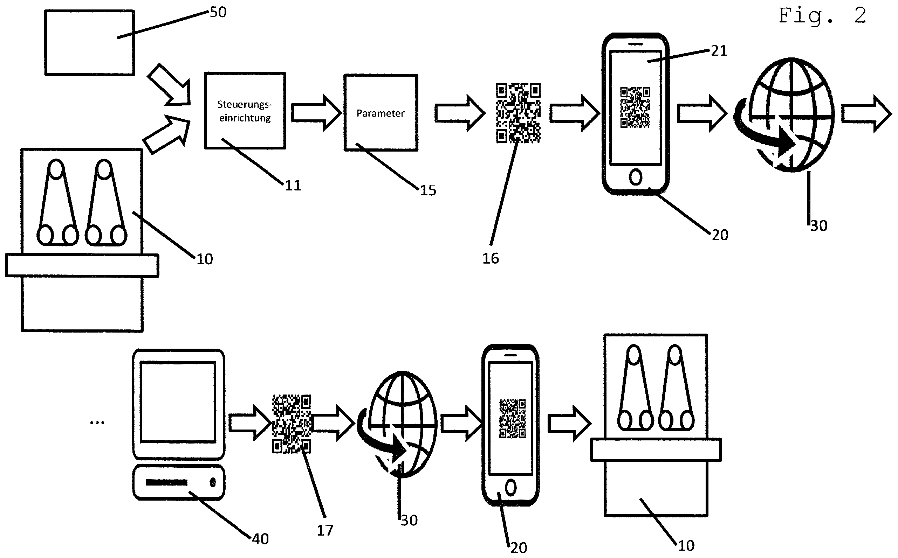

Fig. 1 zeigt eine schematische Darstellung einer Bearbeitungsvorrichtung 10 für die Bearbeitung eines Werkstücks 50 (siehe Fig. 2), dass bevorzugt zumindest abschnittsweise aus Holz, Holzwerkstoffen, Kunststoff oder dergleichen besteht. Eine solche Bearbeitungsvorrichtung 10 wird üblicherweise in einer Fertigungshalle positioniert und ist in der Lage oben beschriebene Werkstücke 50 zu bearbeiten.

Die Bearbeitungsvorrichtung 10 umfasst eine Steuereinrichtung 11, eine Eingabeeinheit 12, eine Ausgabeeinheit 13, sowie eine Bearbeitungseinheit 14. Alternativ kann die Steuereinrichtung 11 die Eingabeeinheit 12 und die Ausgabeeinheit 13 umfassen.

Das Werkstück 50 wird hierbei mittels der Bearbeitungseinheit 14 bearbeitet. Die Bearbeitungseinheit 14 kann hierbei beispielsweise Fräs-, Säge- oder Schleifvorrichtungen aufweisen. Diese Bearbeitung wird durch die Steuerungseinrichtung 11 und entsprechende Bearbeitungsparameter 15 (siehe Fig. 2) gesteuert.

Die Steuerungseinrichtung 11 ist üblicherweise in Form eines Rechenmoduls oder eines Computers, eines Industrie-PCs oder PC-ähnlichen Geräten realisiert. Hierbei können Daten gespeichert, deren Verlauf angezeigt und die Parameter 15 dargestellt werden. Die Steuereinrichtung 11 gibt diese eingestellten oder ermittelten Parameter 15 an die Bearbeitungsvorrichtung 10 weiter und/oder empfängt optimierte Bearbeitungsparameter 17 um diese zur Bearbeitung in der Bearbeitungsvorrichtung 10 zu verwenden. Es ist hierbei möglich, dass die Steuerungseinrichtung 11 integral mit der Bearbeitungsvorrichtung 10 ausgestaltet ist, oder dass die Steuerungseinrichtung 11 in einem separaten Gehäuse vorgesehen ist. Somit kann die Steuerungseinrichtung 11 auch abseits der eigentlichen Bearbeitungsvorrichtung 10, also beispielweise außerhalb der Fertigungshalle oder in einem bestimmten Sicherheitsabstand, aufgestellt werden.

Mittels der Eingabeeinheit 12 können, wie oben beschrieben, optimierte Parameter 15 der Bearbeitung für die Bearbeitungseinheit 14 eingelesen werden. Diese Eingabeeinheit 12 kann in Form eines Scanners, einer kabellosen Datenübertragungstechnologie, beispielsweise Bluetooth, NFC oder Infrarot, oder einer Kamera realisiert werden.

Durch diese Ausgabeeinheit 13 ist es, wie oben beschrieben, möglich, die Parameter 15 der Bearbeitung, welche in der Bearbeitungseinheit 14 verwendet werden, um das Werkstück 50 zu bearbeiten, auszugeben. Hierbei werden vorab beispielsweise mittels der Steuerungseinheit 11 die Parameter 15 der Bearbeitung der Bearbeitungseinheit 14 in ein grafisches Erkennungsmuster 16 umgewandelt. Das bevorzugt graphische oder bevorzugt eine graphische Komponente aufweisende Erkennungsmuster 16 kann ein Barcode, ein QR-Code oder ähnliches sein.

Anschließend kann dieses generierte Erkennungsmuster 16 durch die Ausgabeeinheit 13, welche üblicherweise ein Display ist, ausgegeben werden. Hierbei wird üblicherweise die Ausgabe durch die Ausgabeeinheit 13 in Form eines Barcodes, eines QR-Codes, oder ähnliches mittels der Ausgabeeinheit 13 realisiert. Im vorliegenden Ausführungsbeispiel kommt als graphisches Erkennungsmuster 16 ein QR-Code zum Einsatz. Das Erkennungsmuster 16 kann ebenfalls neben einer ein- oder zweidimensionalen Ausgestaltung, auch eine dreidimensionale Ausgestaltung aufweisen. Eine dreidimensionale Ausgestaltung kann beispielsweise dadurch realisiert werden, dass die Pixel des QR-Codes nicht nur schwarz sondern verschieden Farben haben können. Eine weitere beispielhafte dreidimensionale Ausgestaltung des Erkennungsmusters wäre ein räumlich orientierter QR-Code, z.B. ein isometrisch orientiertes Vieleck. Ferner ist es möglich ein Logo, o.ä. in die Form des QR-Codes zu integrieren.

Das Erkennungsmuster 16 kann neben Informationen zu einem fehlerhaft bearbeiteten Werkstück 50, auch fehlerhafte Maschineneinstellungen oder Prozessparameter beinhalten. Ferner kann das Erkennungsmuster 16 neben einer eindeutigen Identifikation der Bearbeitungsvorrichtung 10, Informationen zum Typ, den Aggregaten und dergleichen enthalten. Zudem können Informationen zu den Maschinenzuständen, den Bearbeitungsparametern, Prozessgrößen und dergleichen in dem Erkennungsmuster 16 enthalten sein.

Fig. 2 zeigt einen Ablauf einer Optimierung der Parameter 15 der Bearbeitungsvorrichtung 10.

Zu Beginn der Optimierung oder der Analyse der Bearbeitungsparameter der Bearbeitungsvorrichtungen 10 werden die Parameter 15 zu einem fehlerhaft bearbeiteten Werkstück 50 und/oder einer fehlerhaften Maschineneinstellung durch die Steuerungseinrichtung 11 zu einem grafischen Erkennungsmuster 16 gebündelt. Anschließend können die Parameter 15 in Form des grafischen Erkennungsmuster 16 mittels der Ausgabeeinheit 13 der Bearbeitungsvorrichtung 10 an ein Endgerät 20 ausgegeben werden.

Das Endgerät 20, beispielsweise ein Smartphone, weist neben einem Display 21, eine (nicht abgebildete) Kamera oder eine kabellose Übertragungstechnologie, vorzugsweise Bluetooth, NFC oder Infrarot, auf. Ferner ist das Endgerät 20 mit einer Fernübertragungsverbindung 30, zum Beispiel mittels eines einer entsprechenden nicht dargestellten Transceiver-Einheit über eine kabellose Fernübertragungsverbindung 30, beispielsweise mit dem Internet, verbunden. Diese kabellose Fernübertragungsverbindung 30 kann beispielsweise eine LTE- oder 3G-Verbindung sein.

Somit kann das Erkennungsmuster 16 der Bearbeitungsvorrichtungen 10, welches durch die Steuerungseinrichtung 11 der Bearbeitungsvorrichtungen 10 erzeugt wurde, mittels des Displays der Ausgabeeinheit 13 und der (nicht dargestellten) Kamera des Endgeräts 20 an das mobile Endgerät 20 übertragen werden. Die Kamera des Endgeräts 20 erfasst hierbei automatisch das Erkennungsmuster 16 und ermöglicht somit das Ausgeben der Parameter 15 der Bearbeitungsvorrichtung 10 an die Fernübertragungsverbindung 30, auch wenn die Bearbeitungsvorrichtung 10 selbst keine Datenverbindung an das Internet hat.

In einer alternativen Ausführungsform ist es möglich, dass die Parameter 15 in Form eines grafischen Erkennungsmuster 16 von der Ausgabeeinheit 13 der Bearbeitungsvorrichtung 10 an das Endgerät 20 mittels drahtloser Übertragungstechnologie, beispielsweise Bluetooth, NFC oder Infrarot, übertragen werden können.

Anschließend kann das Erkennungsmuster 16 mittels der Fernübertragungsverbindung 30, zum Beispiel über das Internet oder geeignete Netzwerke, an eine Bearbeitungsparameteroptimierungsvorrichtung 40 übertragen werden. Eine solche Vorrichtung kann beispielsweise direkt beim Hersteller der Bearbeitungsvorrichtung 10 stationiert sein und dient dazu, beispielsweise in einer typengleichen Bearbeitungsvorrichtung oder einer Bearbeitungsvorrichtung, die der Bearbeitungsvorrichtung 10 beim Kunden ähnelt, die Bearbeitung mit dessen Parametern durch einen Support- oder Service-Mitarbeiter des Herstellers durchzuführen.

Eine Übertragung mittels der Fernübertragungsverbindung 30 ist in einer weiteren Ausführungsform bevorzugt verschlüsselt möglich. Ferner ist eine Verschlüsselung mittels peer-to-peer Verschlüsselung realisierbar.

Zum Empfangen der Daten vom Kunden öffnet ein Support-Mitarbeiter des Bearbeitungsvorrichtungsherstellers den Code und kann mittels einer geeigneten Software und einem geeigneten PC oder PC-ähnlichen System die Maschinen- und Bearbeitungsparameter einsehen und bearbeiten. Anschließend ist es dem Support Mitarbeiter möglich, die Einstellungen der Bearbeitungsvorrichtung 10 zu analysieren und etwaige Schwachstellen zu optimieren oder die Bearbeitung zu verbessern.

Um nachfolgend die Übermittlung dieser neuen oder optimierten Bearbeitungsparameter zu vereinfachen, zu beschleunigen und in geringeren Datenpaketen zu ermöglichen, kann ein weiteres Erkennungsmuster 17 dieser optimierten oder analysierten Parameter in der Bearbeitungsparameteroptimierungsvorrichtung 40 mittels der Software erzeugt werden. Anschließend wird dieses weitere Erkennungsmuster 17, zum Beispiel in Form eines QR-Codes, erneut über die Fernübertragungsverbindung 30 oder eine andere Fernübertragungsverbindung an den Kunden oder das Endgerät 20 des Kunden übertragen. Im nächsten Schritt wird anschließend das weitere Erkennungsmuster 17 an die Bearbeitungsvorrichtung 10 mittels des Displays des Endgeräts 20 und des Scanners bzw. der Kamera der Bearbeitungsvorrichtung 10 übertragen und die darin bisher gespeicherten Bearbeitungsparameter werden mittels der übermittelten Parameter aktualisiert. Alternativ ist es möglich, das weitere Erkennungsmuster 17 an die Bearbeitungsvorrichtung 10 mittels drahtloser Übertragungstechnologie (z.B. Bluetooth, WLAN, NFC oder Infrarot) vom Endgerät 20 an die Bearbeitungsvorrichtung übertragen werden.

In einer weiteren Ausführungsform ist es möglich, dass in der Bearbeitungsparameteroptimierungsvorrichtung 40 bereits vor der Erstellung des weiteren Erkennungsmusters 17 geprüft wird, ob die gesetzten Parameter auch mit der Bearbeitungsvorrichtung 10 realisierbar sind. Somit ist eine Vermeidung von Zwischenfällen an der Bearbeitungsvorrichtung nach dem Versenden der Parameter realisierbar.

In einer bevorzugten Ausführungsform ist es möglich, dass eine solche Übertragung verschlüsselt, beispielsweise durch peer-to-peer Verschlüsselung, stattfindet.

Anschließend kann, wie oben beschrieben, das weitere Erkennungsmuster 17, zum Beispiel in Form eines QR-Codes, durch das Endgerät 20 an die Bearbeitungsvorrichtungen 10 übertragen werden. Hierbei kann, wie bereits oben erwähnt, die Übertragung des weiteren Erkennungsmusters 17 mittels drahtloser Übertragungstechnologie, beispielsweise Bluetooth, NFC, WLAN oder Infrarot, stattfinden.

In einer weiteren Ausführungsform ist es möglich, dass die Übertragung des weiteren Erkennungsmusters 17 zwischen dem Endgerät 20 und der Bearbeitungsvorrichtungen 10 mittels des Displays 21 des Smartphones (Endgerät 20) und dem an der Bearbeitungsvorrichtung 10 vorgesehenen Scanner stattfindet. Ferner kann auch die Bearbeitungsvorrichtung 10 eine (nicht dargestellte) Kamera aufweisen, so dass das Display 21 des Endgeräts 20 erkannt werden kann. Somit ist eine Übertragung des weiteren Erkennungsmusters 17 an die Bearbeitungsvorrichtung 10 möglich.

In der Bearbeitungsvorrichtung 10 wird anschließend das weitere Erkennungsmuster 17, das durch die Bearbeitungsparameteroptimierungsvorrichtung 40 generiert worden ist, geöffnet und die Bearbeitungsvorrichtung 10 oder dessen Steuerungsvorrichtung ist lädt die optimierten Maschinen- und Bearbeitungsparameter, um diese für die weitere Bearbeitung von Werkstücken mit der Bearbeitungsvorrichtung 10 zu verwenden.

In einer weiteren Ausführungsform ist es möglich, dass optimierte Parameter 15 in Form eines weiteren Erkennungsmusters 17 für bestimmte Bearbeitungsvorrichtungstypen bereitgestellt werden. Somit ist es dem Kunden möglich, bereits vorab ohne eine individuelle Anpassung der Bearbeitungsparameter 15 eine Optimierung der Bearbeitung in Form von Bearbeitungsprogrammen, optimierten Prozesseinstellungen und Anwendungsoptimierungen zu erreichen. Diese optimierten Bearbeitungsparameter können aus einer nicht dargestellten Datenbank mittels der Fernübertragungsverbindung 30, in Form eines weiteren Erkennungsmusters 17 auf das Endgerät 20 geladen werden. Anschließend ist es wie oben beschrieben möglich, das weitere Erkennungsmuster 17 auf die Bearbeitungsvorrichtung 10 zu übertragen. Dort wird das weitere Erkennungsmuster 17 ausgelesen und die darin enthaltenen Maschinen- und/oder Bearbeitungsparameter geladen und für die weitere Bearbeitung von Werkstücken mit der Bearbeitungsvorrichtung 10 verwendet.

## Patentansprüche

1. System zur Analyse und/oder Optimierung der Bearbeitung von Werkstücken (50), die bevorzugt zumindest abschnittsweise aus Holz, Holzwerkstoffen, Kunststoff oder dergleichen bestehen, aufweisend:
eine Bearbeitungsvorrichtung (10) zur Durchführung einer Bearbeitung von Werkstücken (50), die bevorzugt zumindest abschnittsweise aus Holz, Holzwerkstoffen, Kunststoff oder dergleichen bestehen, aufweisend:
eine Bearbeitungseinheit (14) zur Durchführung der Bearbeitung der Werkstücke (50); und
eine Steuerungseinrichtung (11), welche dazu eingerichtet ist, aus Maschinen- und Bearbeitungsparametern (15) der Bearbeitungsvorrichtung (10) ein eine graphische Komponente aufweisendes erstes Erkennungsmuster (16) zu generieren, und
aus einem empfangenen eine graphische Komponente aufweisenden zweiten Erkennungsmuster (17) Maschinen- und Bearbeitungsparameter (15) der Bearbeitungsvorrichtung (10) zu ermitteln;
eine Bearbeitungsparameteroptimierungsvorrichtung (40), die dazu eingerichtet ist,
die Maschinen- und Bearbeitungsparameter (15) der Bearbeitungsvorrichtung (10) in Form des ersten Erkennungsmusters (16) zu empfangen,
das erste Erkennungsmuster (16) zu entpacken und diese Maschinen- und Bearbeitungsparameter (15) zu analysieren und/oder zu optimieren,
sowie das eine graphische Komponente aufweisende zweite Erkennungsmuster (17) aus den analysierten und/oder optimierten Maschinen- und Bearbeitungsparametern (15) zu erzeugen;
ein Endgerät (20), welches dazu eingerichtet ist,
das erste Erkennungsmuster (16) der Maschinen- und Bearbeitungsparameter (15) der Bearbeitungsvorrichtung (10) einzulesen,
an die Bearbeitungsparameteroptimierungsvorrichtung (40) weiterzuschicken,
analysierte und/oder optimierte Maschinen- und Bearbeitungsparameter (15) in Form des zweiten Erkennungsmusters (17) von der Bearbeitungsparameteroptimierungsvorrichtung (40) zu empfangen und dieses wieder an die Bearbeitungsvorrichtung (10) auszugeben; und
eine Fernübertragungsverbindung (30), die dazu eingerichtet ist, die Erkennungsmuster zwischen dem Endgerät (20) und der Bearbeitungsparameteroptimierungsvorrichtung (40) auszutauschen.

2. System nach Anspruch 1, wobei das Endgerät (20) ausgestaltet ist, das durch die Bearbeitungsvorrichtung (10) generierten erste Erkennungsmuster (16) mittels einer Kamera zu erfassen und mittels der Fernübertragungsverbindung (30) an die Bearbeitungsparameteroptimierungsvorrichtung (40) zu übertragen, und
wobei die Bearbeitungsvorrichtung (10) so ausgestaltet ist, die analysierten und/oder optimierten Maschinen- und Bearbeitungsparameter (15) in Form des zweiten Erkennungsmusters (17) vom Endgerät (20) mittels der Eingabeeinheit (12) zu erfassen.

3. System nach Anspruch 1 oder 2, wobei die Bearbeitungsvorrichtung (10) und das Endgerät (20) eingerichtet sind, die Maschinen- und Bearbeitungsparameter (15) in Form eines Erkennungsmusters mittels einer drahtlosen Übertragungstechnologie, vorzugsweise Bluetooth, zwischen der Bearbeitungsvorrichtung (10) und dem Endgerät (20) zu übertragen.

4. System nach einem der vorherigen Ansprüche, wobei die Übertragung zwischen dem Endgerät (20) und der Bearbeitungsparameteroptimierungsvorrichtung (40) verschlüsselt, bevorzugt mittels einer peer-to-peer Verschlüsselung, stattfindet.

5. System nach einem der vorherigen Ansprüche, wobei optimierte Parameter für die Bearbeitungsvorrichtung (10) in einer Datenbank mittels der Fernübertragungsverbindung (30) bereitgestellt werden.

6. System nach einem der vorherigen Ansprüche, wobei das erste Erkennungsmuster (16) oder das zweite Erkennungsmuster (17) neben Maschinen- und Bearbeitungsparametern, insbesondere Parameter zum Typ, zu den Aggregaten, sowie den Maschinenzuständen, eine eindeutige Maschinenidentifikation, aufweisen.

7. Verfahren zur Analyse und/oder Optimierung von Maschinen- und Bearbeitungsparametern (15) in einem System nach Anspruch 1 mit den in der Bearbeitungsparameteroptimierungsvorrichtung (40) ausgeführten Schritten:
Empfangen der mittels einer Fernübertragungsverbindung (30) von einem Endgerät (20) übermittelten Maschinen- und Bearbeitungsparameter (15) in der Bearbeitungsparameteroptimierungsvorrichtung (40) in Form eines eine graphische Komponente aufweisenden ersten Erkennungsmusters (16);
Auslesen der Maschinen- und Bearbeitungsparameter (15) aus dem ersten Erkennungsmuster (16);
Analyse und/oder Optimierung der Maschinen- und Bearbeitungsparameter (15);
Generierung eines zweiten Erkennungsmusters (17) aus den analysierten und/oder optimierten Maschinen- und Bearbeitungsparametern (15) der Bearbeitungsvorrichtung (10);
Versenden des zweiten Erkennungsmusters (17) an das Endgerät (20).

8. Verfahren nach Anspruch 7, ferner mit den Schritten:
Digitale Übermittlung von analysierten und/oder optimierten Maschinen- und Bearbeitungsparametern der Bearbeitungsvorrichtung (10) in Form des zweiten Erkennungsmusters (17) von der Bearbeitungsparameteroptimierungsvorrichtung (40) über die Fernübertragungsverbindung (30) zum Endgerät (20).

9. Verfahren zur Analyse und/oder Optimierung von Maschinen- und Bearbeitungsparametern (15) einer Bearbeitungsvorrichtung (10) zur Bearbeitung von Werkstücken (50), die bevorzugt zumindest teilweise aus Holz, Holzwerkstoffen, Kunststoff oder dergleichen bestehen, mit den Schritten:
Generierung eines ersten Erkennungsmusters (16) der Maschinen- und Bearbeitungsparameter (15) in der Bearbeitungsvorrichtung(10) ;
Übertragung des ersten Erkennungsmusters (16) der Maschinen- und Bearbeitungsparameter (15) von der Bearbeitungsvorrichtung (10) auf ein Endgerät (20) mittels einer Ausgabeeinheit (13) der Bearbeitungsvorrichtung (10);
Digitale Übermittlung der Maschinen- und Bearbeitungsparameter (15) in Form des ersten Erkennungsmusters (16) vom Endgerät (20) zu einer Bearbeitungsparameteroptimierungsvorrichtung (40) gemäß Anspruch 1 mittels einer Fernübertragungsverbindung (30);
Analyse und/oder Optimierung der Maschinen- und Bearbeitungsparameter (15) unter Verwendung der Bearbeitungsparameteroptimierungsvorrichtung (40);
Digitale Übermittlung eines zweiten Erkennungsmusters (17) mit optimierten Maschinen- und Bearbeitungsparametern (15) von der Bearbeitungsparameteroptimierungsvorrichtung (40) zum Endgerät (20);
Einlesen des zweiten Erkennungsmusters (17) vom Endgerät (20) in die Bearbeitungsvorrichtung (10) mittels einer Eingabeeinheit (12) der Bearbeitungsvorrichtung (10);
Nutzung der optimierten Maschinen- und Bearbeitungsparameter in der Bearbeitungsvorrichtung (10).

10. Verfahren nach Anspruch 9, wobei im Schritt der Übertragung des Erkennungsmusters das Endgerät (20) und die Bearbeitungsvorrichtung (10) die Maschinen- und Bearbeitungsparameter (15) mittels einer Kamera des Endgeräts (20) und der Ausgabeeinheit (13) der Bearbeitungsvorrichtung (10) austauschen.

11. Verfahren nach Anspruch 9 oder 10, wobei im Schritt des Einlesens des zweiten Erkennungsmusters (17) das Endgerät (20) und die Eingabeeinheit (12) der Bearbeitungsvorrichtung (10) die Maschinen- und Bearbeitungsparameter (15) mittels der Eingabeeinheit (12) der Bearbeitungsvorrichtung (10) und einem Display (21) des Endgeräts (20) austauschen.

12. Verfahren nach einem der Ansprüche 9 bis 11, wobei in den Schritten der Übertragung und/oder des Einlesens das Endgerät (20) und die Bearbeitungsvorrichtung (10) mittels drahtloser Übertragungstechnologie, insbesondere Bluetooth, die Maschinen- und Bearbeitungsparameter (15) in Form des Erkennungsmusters austauschen.

13. Verfahren nach einem der Ansprüche 9 bis 12, wobei die Übertragung des Erkennungsmusters in den Schritten der digitalen Übermittlung verschlüsselt, insbesondere durch peer-to-peer Verschlüsselung, stattfindet.

14. Verfahren nach einem der Ansprüche 9 bis 13, wobei optimierte Maschinen- und Bearbeitungsparameter aus einer Datenbank geladen werden können.

15. Verfahren nach einem der Ansprüche 9 bis 14, wobei das erste Erkennungsmuster (16) oder das zweite Erkennungsmuster (17) einen ein-, zwei-, oder dreidimensionalen Code aufweist.

## Claims

1. System for analysing and/or optimising the machining of workpieces (50) that preferably consist at least in portions of wood, wood-based materials, plastics material or the like, comprising:
a machining device (10) for carrying out machining of workpieces (50) that preferably consist at least in portions of wood, wood-based materials, plastics material or the like, comprising:
a machining unit (14) for carrying out the machining of the workpieces (50); and
a controller (11), which is configured to generate a first recognition pattern (16) comprising a graphical component from machine and machining parameters (15) of the machining device (10), and
to determine machine and machining parameters (15) of the machining device (10) from a received second recognition pattern (17) comprising a graphical component;
a machining parameter optimisation device (40), which is configured to
receive the machine and machining parameters (15) of the machining device (10) in the form of the first recognition pattern (16),
unpack the first recognition pattern (16) and to analyse and/or optimise these machine and machining parameters (15),
and generate the second recognition pattern (17) comprising a graphical component from the analysed and/or optimised machine and machining parameters (15);
a terminal (20), which is configured to read in the first recognition pattern (16) of the machine and machining parameters (15) of the machining device (10),
forward said first recognition pattern to the machining parameter optimisation device (40),
receive analysed and/or optimised machine and machining parameters (15) in the form of the second recognition pattern (17) from the machining parameter optimisation device (40) and to output said second recognition pattern to the machining device (10) again; and
a remote transmission link (30), which is configured to exchange the recognition patterns between the terminal (20) and the machining parameter optimisation device (40).

2. System according to claim 1, wherein the terminal (20) is designed to acquire the first recognition pattern (16) generated by means of the machining device (10) using a camera and to transmit said first recognition pattern to the machining parameter optimisation device (40) by means of the remote transmission link (30), and
wherein the machining device (10) is designed to acquire the analysed and/or optimised machine and machining parameters (15) in the form of the second recognition pattern (17) from the terminal (20) by means of the input unit (12).

3. System according to claim 1 or 2, wherein the machining device (10) and the terminal (20) are configured to transmit the machine and machining parameters (15) in the form of a recognition pattern by means of wireless transmission technology, preferably Bluetooth, between the machining device (10) and the terminal (20).

4. System according to any of the preceding claims, wherein the transmission between the terminal (20) and the machining parameter optimisation device (40) takes place in an encrypted manner, preferably by means of peer-to-peer encryption.

5. System according to any of the preceding claims, wherein optimised parameters are provided for the machining device (10) in a database by means of the remote transmission link (30).

6. System according to any of the preceding claims, wherein the first recognition pattern (16) or the second recognition pattern (17) comprise a unique machine identification in addition to machine and machining parameters, in particular parameters for the type, the assemblies and the machine states.

7. Method for analysing and/or optimising machine and machining parameters (15) in a system according to claim 1, comprising the following steps executed in the machining parameter optimisation device (40):
receiving the machine and machining parameters (15) transmitted by means of a remote transmission link (30) from a terminal (20) in the machining parameter optimisation device (40) in the form of a first recognition pattern (16) comprising a graphical component;
reading out the machine and machining parameters (15) from the first recognition pattern (16);
analysing and/or optimising the machine and machining parameters (15);
generating a second recognition pattern (17) from the analysed and/or optimised machine and machining parameters (15) of the machining device (10);
sending the second recognition pattern (17) to the terminal (20).

8. Method according to claim 7, further comprising the steps of:
digitally transmitting analysed and/or optimised machine and machining parameters of the machining device (10) in the form of the second recognition pattern (17) from the machining parameter optimisation device (40) via the remote transmission link (30) to the terminal (20).

9. Method for analysing and/or optimising machine and machining parameters (15) of a machining device (10) for machining workpieces (50) that preferably consist at least in portions of wood, wood-based materials, plastics material or the like, comprising the steps of:
generating a first recognition pattern (16) of the machine and machining parameters (15) in the machining device (10);
transmitting the first recognition pattern (16) of the machine and machining parameters (15) from the machining device (10) to a terminal (20) by means of an output unit (13) of the machining device (10);
digitally transmitting the machine and machining parameters (15) in the form of the first recognition pattern (16) from the terminal (20) to a machining parameter optimisation device (40) according to claim 1 by means of a remote transmission link (30);
analysing and/or optimising the machine and machining parameters (15) using the machining parameter optimisation device (40);
digitally transmitting a second recognition pattern (17) with optimised machine and machining parameters (15) from the machining parameter optimisation device (40) to the terminal (20);
reading the second recognition pattern (17) from the terminal (20) into the machining device (10) by means of an input unit (12) of the machining device (10);
using the optimised machine and machining parameters in the machining device (10).

10. Method according to claim 9, wherein the terminal (20) and the machining device (10) exchange the machine and machining parameters (15) by means of a camera of the terminal (20) and the output unit (13) of the machining device (10) in the step of transmitting the recognition pattern.

11. Method according to claim 9 or 10, wherein the terminal (20) and the input unit (12) of the machining device (10) exchange the machine and machining parameters (15) by means of the input unit (12) of the machining device (10) and a display (21) of the terminal (20) in the step of reading in the second recognition pattern (17).

12. Method according to any of claims 9 to 11,
wherein the terminal (20) and the machining device (10) exchange the machine and machining parameters (15) in the form of the recognition pattern by means of wireless transmission technology, in particular Bluetooth, in the steps of transmitting and/or reading in.

13. Method according to any of claims 9 to 12,
wherein the transmission of the recognition pattern in the steps of digital transmission takes place in an encrypted manner, in particular by means of peer-to-peer encryption.

14. Method according to any of claims 9 to 13,
wherein optimised machine and machining parameters can be loaded from a database.

15. Method according to any of claims 9 to 14,
wherein the first recognition pattern (16) or the second recognition pattern (17) comprises a one-, two- or three-dimensional code.

## Revendications

1. Système d'analyse et/ou d'optimisation de l'usinage de pièces (50), qui sont constituées de préférence au moins par sections de bois, de matériaux à bois, de plastique ou similaire, présentant :
un dispositif d'usinage (10) pour la réalisation d'un usinage de pièces (50), qui sont constituées de préférence au moins par sections de bois, de matériaux à bois, de plastique ou similaire, présentant :
une unité d'usinage (14) pour la réalisation de l'usinage des pièces (50) ; et
un dispositif de commande (11), qui est configuré pour générer, à partir de paramètres de machine et d'usinage (15) du dispositif d'usinage (10), un premier motif de détection (16) présentant une composante graphique, et
déterminer des paramètres de machine et d'usinage (15) du dispositif d'usinage (10) à partir d'un second motif de détection (17) reçu présentant une composante graphique ;
un dispositif d'optimisation des paramètres d'usinage (40), qui est configuré pour
recevoir les paramètres de machine et d'usinage (15) du dispositif d'usinage (10) sous forme du premier motif de détection (16),
décompresser le premier motif de détection (16) et analyser et/ou optimiser ces paramètres de machine et d'usinage (15),
ainsi que générer le second motif de détection (17) présentant une composante graphique à partir des paramètres de machine et d'usinage (15) analysés et/ou optimisés ;
un terminal (20), qui est configuré pour
enregistrer le premier motif de détection (16) des paramètres de machine et d'usinage (15) du dispositif d'usinage (10),
le transmettre au dispositif d'optimisation des paramètres d'usinage (40),
recevoir les paramètres de machine et d'usinage (15) analysés et/ou optimisés sous forme du second motif de détection (17) du dispositif d'optimisation des paramètres d'usinage (40) et l'émettre de nouveau au dispositif d'usinage (10) ; et
une liaison de transmission à distance (30), qui est configurée pour échanger les motifs de détection entre le terminal (20) et le dispositif d'optimisation des paramètres d'usinage (40).

2. Système selon la revendication 1, dans lequel le terminal (20) est conçu pour détecter le premier motif de détection (16) généré par le dispositif d'usinage (10) au moyen d'une caméra et le transmettre au dispositif d'optimisation des paramètres d'usinage (40) au moyen de la liaison de transmission à distance (30), et
dans lequel le dispositif d'usinage (10) est conçu de manière à détecter les paramètres de machine et d'usinage (15) analysés et/ou optimisés sous forme du second motif de détection (17) du terminal (20) au moyen de l'unité d'entrée (12).

3. Système selon la revendication 1 ou 2, dans lequel le dispositif d'usinage (10) et le terminal (20) sont configurés pour transmettre les paramètres de machine et d'usinage (15) sous forme d'un motif de détection au moyen d'une technologie de transmission sans fil, de préférence Bluetooth, entre le dispositif d'usinage (10) et le terminal (20).

4. Système selon l'une quelconque des revendications précédentes, dans lequel la transmission entre le terminal (20) et le dispositif d'optimisation des paramètres d'usinage (40) a lieu de manière chiffrée, de préférence au moyen d'un chiffrement pair à pair.

5. Système selon l'une quelconque des revendications précédentes, dans lequel des paramètres optimisés pour le dispositif d'usinage (10) sont prévus dans une base de données au moyen de la liaison de transmission à distance (30).

6. Système selon l'une quelconque des revendications précédentes, dans lequel le premier motif de détection (16) ou le second motif de détection (17) présente, outre des paramètres de machine et d'usinage, en particulier des paramètres relatifs au type, aux groupes, ainsi qu'aux états de machine, une identification de machine évidente.

7. Procédé d'analyse et/ou d'optimisation de paramètres de machine et d'usinage (15) dans un système selon la revendication 1, avec les étapes exécutées dans le dispositif d'optimisation de paramètres d'usinage (40) consistant à :
recevoir, dans le dispositif d'optimisation des paramètres d'usinage (40), les paramètres de machine et d'usinage (15) transmis par un terminal (20) au moyen d'une liaison de transmission à distance (30), sous forme d'un premier motif de détection (16) présentant une composante graphique ;
enregistrer les paramètres de machine et d'usinage (15) à partir du premier motif de détection (16) ;
analyser et/ou optimiser les paramètres de machine et d'usinage (15) ;
générer un second motif de détection (17) à partir des paramètres de machine et d'usinage (15) analysés et/ou optimisés du dispositif d'usinage (10) ;
envoyer le second motif de détection (17) au terminal (20).

8. Procédé selon la revendication 7, avec en outre les étapes consistant à :
transmettre par voie numérique des paramètres de machine et d'usinage analysés et/ou optimisés du dispositif d'usinage (10) sous forme du second motif de détection (17) à partir du dispositif d'optimisation des paramètres d'usinage (40) vers le terminal (20) par l'intermédiaire de la liaison de transmission à distance (30).

9. Procédé d'analyse et/ou d'optimisation de paramètres de machine et d'usinage (15) d'un dispositif d'usinage (10) pour l'usinage de pièces (50), qui sont constituées de préférence au moins partiellement de bois, de matériaux à bois, de plastique ou similaire, avec les étapes consistant à :
générer un premier motif de détection (16) des paramètres de machine et d'usinage (15) dans le dispositif d'usinage (10) ;
transmettre le premier motif de détection (16) des paramètres de machine et d'usinage (15) du dispositif d'usinage (10) à un terminal (20) au moyen d'une unité de sortie (13) du dispositif d'usinage (10) ;
transmettre par voie numérique les paramètres de machine et d'usinage (15) sous forme du premier motif de détection (16) à partir du terminal (20) vers un dispositif d'optimisation des paramètres d'usinage (40) selon la revendication 1 au moyen d'une liaison de transmission à distance (30) ;
analyser et/ou optimiser les paramètres de machine et d'usinage (15) en utilisant le dispositif d'optimisation des paramètres d'usinage (40) ;
transmettre par voie numérique un second motif de détection (17) avec des paramètres de machine et d'usinage (15) optimisés à partir du dispositif d'optimisation des paramètres d'usinage (40) vers le terminal (20) ;
enregistrer le second motif de détection (17) du terminal (20) dans le dispositif d'usinage (10) au moyen d'une unité d'entrée (12) du dispositif d'usinage (10) ;
utiliser les paramètres de machine et d'usinage optimisés dans le dispositif d'usinage (10).

10. Procédé selon la revendication 9, dans lequel, à l'étape de transmission du motif de détection, le terminal (20) et le dispositif d'usinage (10) échangent les paramètres de machine et d'usinage (15) au moyen d'une caméra du terminal (20) et de l'unité de sortie (13) du dispositif d'usinage (10).

11. Procédé selon la revendication 9 ou 10, dans lequel, à l'étape d'enregistrement du second motif de détection (17), le terminal (20) et l'unité d'entrée (12) du dispositif d'usinage (10) échangent les paramètres de machine et d'usinage (15) au moyen de l'unité d'entrée (12) du dispositif d'usinage (10) et d'un écran (21) du terminal (20).

12. Procédé selon l'une quelconque des revendications 9 à 11, dans lequel, lors des étapes de transmission et/ou d'enregistrement, le terminal (20) et le dispositif d'usinage (10) échangent les paramètres de machine et d'usinage (15) sous forme du motif de détection au moyen d'une technologie de transmission sans fil, en particulier Bluetooth.

13. Procédé selon l'une quelconque des revendications 9 à 12, dans lequel la transmission du motif de détection a lieu de manière chiffrée, en particulier par chiffrement pair à pair, lors des étapes de transmission numérique.

14. Procédé selon l'une quelconque des revendications 9 à 13, dans lequel des paramètres de machine et d'usinage optimisés peuvent être chargés à partir d'une base de données.

15. Procédé selon l'une quelconque des revendications 9 à 14, dans lequel le premier motif de détection (16) ou le second motif de détection (17) présente un code unidimensionnel, bidimensionnel ou tridimensionnel.
